# EUROPÄISCHE PATENTSCHRIFT

(11) **EP 1 657 487 B1**
(45) Veröffentlichungstag und Bekanntmachung des Hinweises auf die Patenterteilung: **20.11.2013**
(21) Anmeldenummer: 05023383.2
(22) Anmeldetag: 26.10.2005
(51) Int. Cl.: F21V 5/00, G06K 1/12, C03B 11/08

(54) **Linse für Beleuchtungszwecke, Vorrichtung und Verfahren zur Herstellung solcher Linsen**
Lens for lighting purposes, apparatus and method for its manufacturing
Lentille destinée à être utilisée à des fins d'éclairage, ainsi que dispositif et procédé pour sa fabrication

(30) Priorität: 15.11.2004 DE 102004056073
(43) Veröffentlichungstag der Anmeldung: 17.05.2006
(73) Patentinhaber: Hella KGaA Hueck & Co., 59552 Lippstadt (DE)
(72) Erfinder: Körner, Steffen, 31073 Delligsen (DE); Dobrescu, Martin, 59558 Lippstadt (DE); Hofmann, Thomas, 59597 Erwitte (DE)
(74) Vertreter: Gahlert, Stefan

(56) Entgegenhaltungen:
- WO-A-03/087893
- WO-A-2004/000749
- DE-A1- 10 050 263
- US-A- 5 201 927
- US-B1- 6 188 040
- US-B1- 6 555 184
- "PRODUCT NEWS" SPRECHSAAL, VERLAG DES SPRECHSAAL MULLER UND SCHMIDT. COBURG, DE, Bd. 121, Nr. 9, August 1988 (1988-08), Seite 708,710,712,71, XP000021087 ISSN: 0341-0676

## Beschreibung

Die Erfindung betrifft eine Linse für Beleuchtungszwecke, insbesondere eine Linse für einen Scheinwerfer zur Abbildung des von einer Lichtquelle ausgesandten und ggf. von einem Reflektor reflektierten Lichtes zur Erzeugung eines vorgegebenen Beleuchtungsmusters, mit einer individualisierten Codierung, die mittels individualisierter Produktdaten aus einem Herstellungsprozess erzeugt ist, wobei die individualisierten Produktdaten zumindest einen charakteristischen Wert aufweisen, der von einem fortlaufenden Zähler aus einem Herstellungsprozess erzeugt ist.

Eine derartige Linse ist aus US 6,188,040 bekannt.

Die Erfindung betrifft ferner eine Vorrichtung zur Herstellung von Linsen für Beleuchtungszwecke, mit einer Formgebungseinrichtung zum Formen von Linsen, insbesondere einer Presseinrichtung zum Heißpressen von Linsen, und mit einer Prozesssteuereinrichtung zur Steuerung des Formgebungsvorgangs.

Die Erfindung betrifft ferner ein Verfahren zur Herstellung von Linsen, bei dem eine Vielzahl von Linsen vorzugsweise in einem taktweise arbeitenden Herstellverfahren geformt wird.

Eine derartige Vorrichtung und ein derartiges Verfahren sind aus US 5,201,927 bekannt.

Seit Mitte der achtziger Jahre wird für Automobile der Ober- und oberen Mittelklasse der so genannte "Poly-Ellipsoid-Scheinwerfer" (PES) angeboten, der anstelle der Streulichtscheibe eine Plan-Asphäre als Linse besitzt, die auf einen Dreifach-Ellipsoid-Reflektor oder in neuerer Zeit auch auf Freiformflächenreflektoren abgestimmt ist.

Der grundsätzliche Aufbau solcher Scheinwerfer ist bekannt und kann beispielsweise der DE 198 14 480 A entnommen werden. Ein solcher PES-Scheinwerfer umfasst einen Reflektor, der aus einem Ellipsenabschnitt besteht und eine einzige Lichtquelle aufweist, die im Bereich des ersten Brennpunktes des Reflektors angeordnet ist. In diesem Scheinwerfer ist in einem Abstand vom Reflektor eine plankonvexe Linse vorgesehen, deren Brennpunkt in einem Bereich des zweiten Brennpunktes des Reflektors liegt. Zwischen dem Reflektor und der plankonvexen Linse ist eine Blende eingefügt, die in einem Bereich des zweiten Brennpunktes des Reflektors positioniert ist. Sie weist eine entsprechend angepasste Form auf, damit das vom Scheinwerfer ausgehende Lichtbündel die vorgeschriebene Hell-Dunkel-Grenze erfüllt. Infolge der in jüngster Zeit immer mehr zunehmenden Vorschriften zur Qualitätskontrolle in der Automobilindustrie nehmen die Qualitätsanforderungen, die an derartige Linsen gestellt werden, ständig zu.

Aus der eingangs genannten US 6,188,040 ist ein Gegenstand aus lichtdurchlässigem synthetischen Material bekannt, beispielsweise eine Linse, der eine Gravurzelle aufweist, die sich in Form eines Schachtes darstellt. Die Gravurzelle weist an ihrem Boden bei Betrachtung des Reliefs der Gravurzelle zumindest einen Vorsprung auf. Es ist das Ziel dieser Ausgestaltung, einen ausreichenden Kontrast für das aufzubringende Symbol zu erhalten, so dass trotz der Abwesenheit eines Bindemittels ein späteres Lesen dieses Symbols leicht und zuverlässig erfolgen kann.

Aus der eingangs genannten US 5,201,927 ist eine Maschine bekannt, bei der ein Glasrohling zwischen einem oberen Stempel und einem unteren Stempel zu einem gewünschten optischen Element geformt wird. Die Maschine verfügt über eine Kammer mit einem Heizbereich, in dem die Stempel erhitzt werden, einen Formungsbereich, in dem die Stempel zusammengepresst werden, und einen Abkühlbereich zum Abkühlen der geformten Rohlinge.

Die US 6,555,184 zeigt einen Scheinwerfer für ein Fahrzeug mit einer vorderen Linse, die Markierungen aufweist, die durch eine Bestrahlung mittels eines Laserstrahls erzeugt werden. Die Markierungen werden gebildet, indem mittels des Laserstrahls kleine Rillen in die Oberfläche der Linse eingebracht werden.

Ferner ist es aus der WO 2004/000749 A1 bekannt, Glasbehälter, wie z.B. Ampullen oder Flaschen, mittels eines Lasers zu kennzeichnen. Dafür wird in einem ersten Schritt mittels eines Lasers ein Muster auf das Glasobjekt aufgebracht. In einem zweiten Schritt wird das Muster mittels einer CCD-Kamera geprüft.

Der Erfindung liegt die Aufgabe zugrunde, eine Möglichkeit zu schaffen, mit der ein Nachweis der Einhaltung der Qualitätsstandards vereinfacht werden kann.

Diese Aufgabe wird erfindungsgemäß durch die eingangs genannte Linse gelöst, wobei die Codierung an der Mantelfläche eines umlaufenden Befestigungsrands der Linse vorgesehen ist, der zur Halterung der Linse ausgebildet ist.

Es kann sich hierbei um Linsen aus Glas oder Kunststoff handeln.

Die Aufgabe wird ferner durch die eingangs genannte Vorrichtung gelöst, die außerdem eine Codiereinrichtung zur Kennzeichnung der Linsen mit einer Codierung und eine Zähleinrichtung hat, die einen Zähler aufweist, dessen Wert bei jeder der Codiereinrichtung zugeführten Linse um ein Inkrement vergrößerbar ist, wobei die Codiereinrichtung einen Laser zur Erzeugung eines Schreibstrahls und eine Lasersteuereinrichtung zur Steuerung des Schreibstrahls aufweist, wobei die Zähleinrichtung mit der Lasersteuereinrichtung zur Steuerung des Schreibstrahls derart gekoppelt ist, dass eine Individualisierung der Codierung zumindest in Abhängigkeit vom Wert des Zählers gewährleistet ist.

Die Aufgabe der Erfindung wird ferner durch das eingangs genannte Verfahren gelöst, das außerdem die folgenden Schritte aufweist:
- Erzeugen eines für jede Linse charakteristischen Werts, indem die Linsen bei Zuführung zu der Codiereinrichtung oder bei ihrer Herstellung gezählt werden und ein Zähler bei jedem Zuführvorgang bzw. bei jedem Herstellvorgang um ein Inkrement erhöht wird, und
- Erzeugen einer individualisierenden Codierung an der Linse, insbesondere an einer Oberfläche der Linse, wobei die Codierung jeder Linse in Abhängigkeit von dem jeweiligen Wert des Zählers individualisiert wird.

Die Aufgabe der Erfindung wird auf diese Weise vollkommen gelöst.

Indem nämlich jede Linse in einem fortlaufenden Herstellungsprozess mit einer individualisierten Codierung versehen wird, kann die Einhaltung der vorgegebenen Toleranzgrenzen lückenlos dokumentiert werden und insbesondere jede hergestellte Linse noch nach längerer Benutzung in einem Scheinwerfer jederzeit vollständig zurückverfolgt werden auf den Ort und Zeitpunkt ihrer Herstellung und insbesondere auch auf die Zuordnung zu einem Produktionslauf, dessen Qualität regelmäßig überprüft und dokumentiert wurde.

Der Begriff "Zähler" ist in diesem Zusammenhang ganz allgemein zu verstehen. Neben einem Zähler im herkömmlichen Sinne ist darunter auch jeder elektronische Zähler zu verstehen, also beispielsweise auch ein Timer, der zur Erzeugung eines Datums oder einer Uhrzeit benutzt wird.

Die Erfindung bietet den Vorteil, dass die optische Funktionsweise der Linse von der Codierung in keiner Weise beeinflusst wird und dass die Codierung auch im eingebauten Zustand der Linse zwecks einer Auslesung gut zugänglich ist.

Gemäß einer vorteilhaften Ausgestaltung der Erfindung ist die Codierung auf einem optisch nicht wirksamen Bereich der Linse aufgebracht.

Wie vorstehend bereits erwähnt, wird die Codierung vorzugsweise mittels eines Lasers erzeugt. Hierbei kann es sich beispielsweise um einen CO₂-Laser handeln.

Dies hat den Vorteil, dass die Codierung in besonders zeitsparender Weise aufgebracht werden kann, ohne dass hierbei mechanische Beeinträchtigungen entstehen. Ferner ist die durch einen Laser erzeugte Codierung sehr widerstandsfähig und kann auch nach Jahren der Benutzung noch mittels eines geeigneten Lesegeräts ausgelesen werden.

Gemäß einer Weiterbildung dieser Ausführung werden mittels des Laserstrahls lokale Mikrorisse oder Kristallisationsbereiche erzeugt, die als Codierung auswertbar sind.

Auf diese Weise wird ein nachteiliger Einfluss auf die Funktionsweise und Haltbarkeit der Linse vermieden.

Auch Farbänderungen können zur Codierung genutzt werden. Dies ist insbesondere für Linsen aus Kunststoff vorteilhaft.

Die Codierung kann beispielsweise alphanumerische Zeichen umfassen.

Gemäß einer weiteren besonders bevorzugten Ausführung der Erfindung umfasst die Codierung einen maschinenlesbaren Code, insbesondere einen Data-Matrix-Code (DMC) nach dem Standard ECC 200.

Der Vorteil eines derartigen Codes ist, dass auf sehr kleinem Raum (von z.B. 2,4 x 2,4 mm) relativ viel Informationen gespeichert werden können (15-stelliger String). Dies erlaubt es, die Codierung auf dem relativ kleinen Befestigungsrand der Linse aufzubringen, so dass sie im eingebauten Zustand nicht sichtbar ist.

Um die einzelnen Bits (Dots) eines maschinenlesbaren Codes gut auslesbar zu machen und um eine sehr dauerhafte Codierung zu gewährleisten, werden durch einen Laserstrahl Mikroformänderungen in Form von Ausbrüchen erzeugt. Diese Ausbrüche können durch die mittels des Laserstrahls induzierten Spannungen erzeugt werden. Hierzu kann beispielsweise der Laserstrahl eine annähernd geschlossene Bahnkurve, z.B. in Form eines Teilkreises, umfahren. Hierbei kann ggf. zusätzlich die Intensität des Laserstrahls verändert werden, um z.B. am Ende durch eine kurze Intensitätserhöhung den Ausbruch des Glases zu induzieren. Alternativ können in einem vorbestimmten Muster mehrere Punktbestrahlungen durchgeführt werden, um den Ausbruch zu induzieren.

Die Oberfläche solcher durch Spannungen erzeugter Ausbrüche ist relativ rau, so dass sich in Folge der Streuwirkung des Lichts eine gute Auslesbarkeit ergibt.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: den prinzipiellen Aufbau eines PES-Scheinwerfers mit einer erfindungsgemäßen Linse in Explosionsdarstellung;
- Fig. 2: eine Seitenansicht einer erfindungsgemäßen Linse;
- Fig. 3: eine Ansicht der Linse gemäß Fig. 2 von vorn;
- Fig. 4: eine Prinzipdarstellung einer erfindungsgemäßen Vorrichtung zur Herstellung von Linsen;
- Fig. 5: einen Teilquerschnitt durch eine erfindungsgemäße Linse im Bereich eines Datenbits in Form eines Mikroausbruches in vergrößerter Darstellung;
- Fig. 6: eine Teilaufsicht auf eine erfindungsgemäße Linse mit dem angedeuteten Verfahrweg eines Laserstrahls zur Erzeugung eines Mikroausbruches für ein Datenbit; und
- Fig. 7: eine Teilaufsicht auf eine erfindungsgemäße Linse im Bereich eines Datenbits in Form eines Mikroausbruches mit einer Mehrzahl von angedeuteten Laser-Punktbestrahlungen.

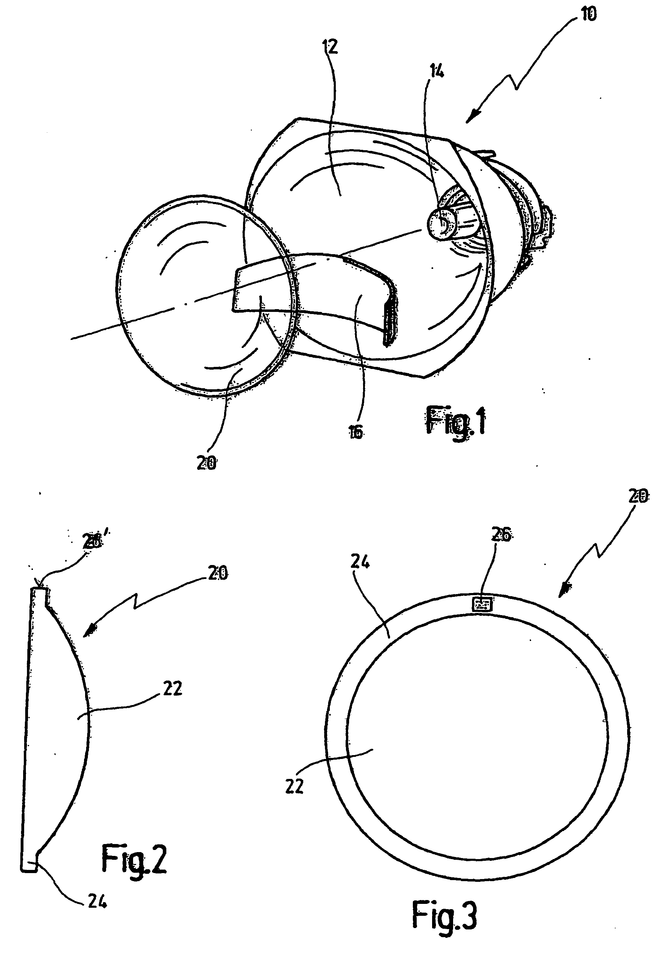

Ein PES-Scheinwerfer mit einer erfindungsgemäßen Linse ist in Fig. 1 dargestellt und insgesamt mit der Ziffer 10 bezeichnet. Der PES-Scheinwerfer 10 besteht aus einem Poly-Ellipsoid-Reflektor 12, einer Lichtquelle 14, etwa in Form einer Halogenlampe, aus einer Blende 16 und aus einer Linse 20. Die Blende 16 ist im Strahlengang zwischen der Lichtquelle 14 und der Linse 20 angeordnet. Durch die Blende 16 wird die untere Hälfte des Strahlenbündels abgeschottet, so dass das Scheinwerferlicht nach Austritt hinter der Linse 20 im Wesentlichen nach unten gerichtet ist. Durch die Abstufung der Oberkante der Blende 16 wird erreicht, dass der Lichtstrahl insbesondere nach rechts unten gelenkt wird, um den Gegenverkehr möglichst wenig zu blenden.

Eine Linse 20 gemäß Fig. 1 ist in Fig. 2 in der Seitenansicht dargestellt. Es handelt sich um eine plankonvexe Linse mit einem optisch wirksamen Bereich 22 und einem optisch nicht wirksamen Bereich 24, der als umlaufener, planparalleler Randbereich ausgebildet ist, der von dem plankonvexen Bereich aus um einige Millimeter nach außen hervorsteht.

Wie aus der Vorderansicht der Linse 20 gemäß Fig. 3 erkennbar ist, ist auf dem optisch nicht wirksamen Randbereich 24 eine Codierung 26 mit einer Fläche von etwa 2,4 x 2,4 mm aufgebracht.

Diese Codierung, die grundsätzlich auch alphanumerische Zeichen aufweisen könnte, besteht vorzugsweise aus einem Data-Matrix-Code (DMC) nach dem Standard ECC 200. Die Codierung ist mit Hilfe eines CO₂-Lasers und einer geeigneten Steuereinrichtung erzeugt. Durch den Laserstrahl werden lokale Mikrorisse oder Vertiefungen auf der Glasoberfläche erzeugt, die mittels eines geeigneten Lesegerätes als Pixel ausgelesen werden können.

Alternativ kann die Codierung auch an der Mantelfläche des Randbereiches 24, insbesondere des Befestigungsrandes, aufgebracht sein, wie in Fig. 2 bei 26' angedeutet.

Je nach Beschaffenheit des verwendeten Glases und Abstimmung des Laserstrahls können alternativ auch Mikrokristallisationsbereiche oder Erhebungen erzeugt werden. Den erzeugten Mikrostrukturen ist jedoch gemeinsam, dass sie sämtlich mittels eines geeigneten Lesegerätes als Pixel bzw. Pixelmuster ausgelesen werden können.

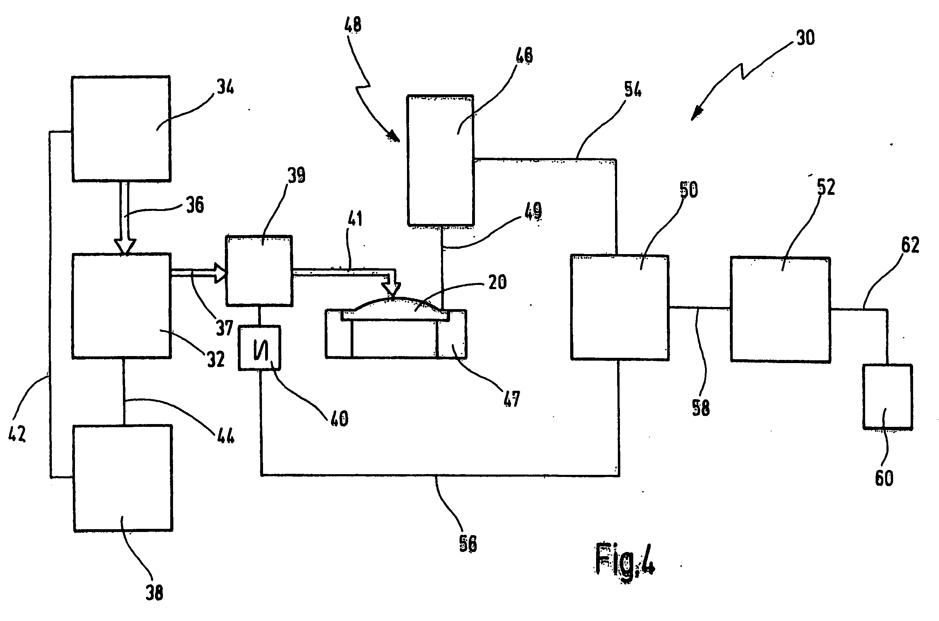

In Fig. 4 ist eine erfindungsgemäße Vorrichtung zur Herstellung einer derartigen Linse dargestellt und insgesamt mit der Ziffer 30 bezeichnet.

Die Vorrichtung 30 weist eine lediglich mit der Ziffer 32 schematisch angedeutete Formgebungseinrichtung zum Formen der Linsen auf. Vorzugsweise ist die Formgebungseinrichtung 32 eine Heißpresseinrichtung, mit der die Linsen in einem Arbeitsgang unter Verwendung einer geeigneten Pressform durch Heißpressen hergestellt werden. Derartige Vorrichtungen zur Herstellung von Linsen für Beleuchtungszwecke sind bekannt (vergleiche z.B. deutsche Patentanmeldung 10 2004 018 424.0, die allerdings nicht vorveröffentlicht ist).

Die Formgebungseinrichtung 32 wird aus einem Schmelzofen 34 mit Glasschmelze gespeist, wie durch den Pfeil 36 schematisch angedeutet ist. Zur Steuerung der Formgebungseinrichtung 32 und der Glasausgabe aus dem Schmelzofen 34 ist eine Prozesssteuereinrichtung 38 vorgesehen, die lediglich schematisch angedeutet ist und bei der es sich beispielsweise um eine SPS-Steuerung handeln kann, die, wie schematisch angedeutet, über Leitungen 44 und 42 mit der Formgebungseinrichtung 32 bzw. dem Schmelzofen 34 gekoppelt ist.

Bei der Formgebungseinrichtung 32 handelt es sich um eine taktweise arbeitende Vorrichtung, mit der nacheinander einzelne oder mehrere Linsen gleichzeitig erzeugt werden. Aus der Formgebungseinrichtung 32 werden die erzeugten Linsen ausgegeben und gegebenenfalls zunächst in einem Speicherbehälter aufgenommen. In der Regel gleichfalls nach Durchführung einer zumindest stichprobenartigen Qualitätskontrolle werden die Linsen nacheinander über eine Handlingeinrichtung 39 einer nachfolgenden Codiereinrichtung zugeführt, die insgesamt mit der Ziffer 48 bezeichnet ist. Die Handlingeinrichtung 39 umfasst einen Zähler 40, dessen Wert n bei der jeweiligen Ausgabe einer Linse zur nachgeordneten Codiereinrichtung 48 um ein Inkrement erhöht wird.

In der nachgeordneten Codiereinrichtung 48 wird nun jede Linse mit einem individualisierten Code versehen, der zumindest in Abhängigkeit des jeweiligen Wertes des Zählers 40 individualisiert ist und darüber hinaus eine Reihe von weiteren Daten enthalten kann.

Die Codiereinrichtung 48 weist einen Halter 47 zur Aufnahme einer Linse 20 auf, ferner einen Laser 46 zur Codierung der Linse 20, eine zugeordnete Lasersteuereinrichtung 50 und einen Scanner 52. Der Laser 46 weist einen Schreibstrahl 49 auf, der mittels der Steuereinrichtung 50 über eine Steuerleitung 54 in geeigneter Weise gesteuert werden kann, um die gewünschte Codierung 26 auf dem Randbereich 24 der Linse 20 zu erzeugen.

Hierbei wird der Wert n des Zählers 40, der über die Leitung 56 mit der Lasersteuereinrichtung 50 gekoppelt ist, berücksichtigt, um die Codierung jeder einzelnen Linse 20 zu individualisieren. Der Scanner 52 kann zusätzlich verwendet werden, um jede Codierung für jede Linse individuell anpassen zu können, wobei Daten betreffend den Herstellort, das Herstelldatum, Qualitätskontrolldaten und dergleichen mehr einfließen können. In den Scanner 52 können Daten 60 eingelesen werden, wie durch den Pfeil 62 angedeutet ist.

Es versteht sich, dass anstelle einer Eingabe über einen Scanner 52 die Lasersteuereinrichtung 50 auch in anderer Weise mit individualisierten Daten zur Codierung versorgt werden kann, beispielsweise über eine SPS-Schnittstelle mit Daten aus dem Produktionsprozess etwa von der Prozesssteuereinrichtung 38, oder mit Daten aus der Qualitätskontrolle unmittelbar versorgt werden kann.

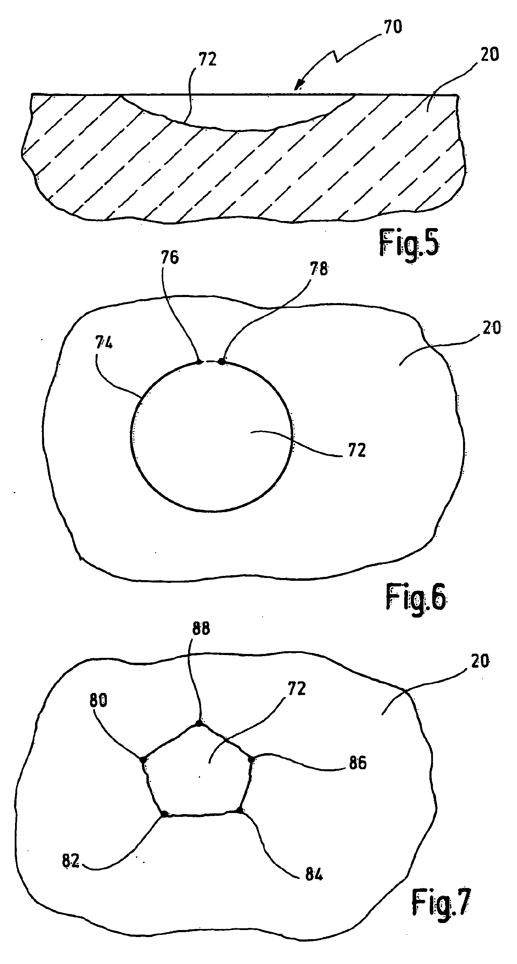

An Hand der Fig. 5 bis 7 wird im Folgenden erläutert, wie einzelne Datenbits der Codierung in Form von Mikroausbrüchen an einer aus Glas bestehenden Linse mittels eines Laserstrahls erzeugt werden können.

Die maschinenlesbare Codierung besteht in diesem Fall aus Datenbits, die durch einen Mikroausbruch an einer vorbestimmten Stelle der Codierung bzw. durch das Fehlen eines solchen Mikroausbruches (also eine glatte Oberfläche an dieser Stelle) gebildet sind.

In Fig. 5 ist ein Datenbit 70 in Form eines Mikroausbruches in vergrößerter Darstellung schematisch gezeigt. Die Innenoberfläche 72 des Mikroausbruches ist relativ rau und ergibt somit durch die Streuwirkung einen guten Kontrast bei der Auslesung.

Fig. 6 zeigt, wie ein solcher Mikroausbruch durch einen Laserstrahl erzeugt werden kann. Hierzu verfährt der Laserstrahl auf einer nahezu geschlossenen Bahnkurve 74 in Form eines Teilkreises beginnend bei 76 mit einer bestimmten Intensität und endet bei 78, wo die Intensität kurzzeitig erhöht wird. Durch die hierdurch erzeugten Spannungen wird das Ausbrechen des Mikroausbruches induziert.

In Fig. 7 ist eine alternative Erzeugung eines Mikroausbruches durch mehrere Laser-Punktbestrahlungen an den Punkten 80, 82, 84, 86, 88 verdeutlicht. Wiederum bricht der durch die Punkte 80 bis 88 umschriebene Teil durch die induzierten Spannungen aus, so dass sich der Mikroausbruch mit der Oberfläche 72 ergibt.

Die hergestellte Codierung ist sehr dauerhaft und kann selbst nach dem rauen Betrieb in einem Kraftfahrzeug auch nach Zeiträumen von mehr als 15 Jahren mittels eines geeigneten Lesegeräts wieder ausgelesen werden.

## Patentansprüche

1. Linse für Beleuchtungszwecke, insbesondere Linse (20) für einen Scheinwerfer (10) zur Abbildung des von einer Lichtquelle (14) ausgesandten und ggf. von einem Reflektor (12) reflektierten Lichtes zur Erzeugung eines vorgegebenen Beleuchtungsmusters, mit einer individualisierten Codierung (26), die mittels individualisierter Produktdaten aus einem Herstellungsprozess erzeugt ist, wobei die individualisierten Produktdaten zumindest einen charakteristischen Wert aufweisen, der von einem fortlaufenden Zähler aus einem Herstellungsprozess erzeugt ist, **dadurch gekennzeichnet, dass** die Codierung (26) an der Mantelfläche (26') eines umlaufenden Befestigungsrands (24) der Linse (20) vorgesehen ist, der zur Halterung der Linse (20) ausgebildet ist.

2. Linse nach Anspruch 1, bei der die Codierung (26) auf einem optisch nicht wirksamen Bereich (24) der Linse (20) aufgebracht ist.

3. Linse nach einem der vorhergehenden Ansprüche, bei der die Codierung (26) mittels eines Lasers (46) oder eines Druckers, insbesondere Tintenstrahldruckers, erzeugt ist.

4. Linse nach einem der vorhergehenden Ansprüche, bei der die Codierung (26) mittels eines CO₂-Lasers (46) erzeugt ist.

5. Linse nach einem der vorhergehenden Ansprüche, bei der die Codierung (26) alphanumerische Zeichen aufweist.

6. Linse nach einem der vorhergehenden Ansprüche, bei der die Codierung (26) eine maschinenlesbare Codierung ist, insbesondere einen Data-Matrix-Code (DMC) nach dem Standard ECC 200 aufweist.

7. Vorrichtung zur Herstellung von Linsen (20) für Beleuchtungszwecke, mit einer Formgebungseinrichtung (32) zum Formen von Linsen (20), insbesondere einer Presseinrichtung zum Heißpressen von Linsen, **gekennzeichnet durch** eine Codiereinrichtung (48) zur Kennzeichnung der Linsen (20) mit einer Codierung (26), und **durch** eine Zähleinrichtung, die einen Zähler (40) aufweist, dessen Wert bei jeder der Codiereinrichtung (48) zugeführten Linse um ein Inkrement vergrößerbar ist, wobei die Codiereinrichtung (48) einen Laser (46) zur Erzeugung eines Schreibstrahls (49) und eine Lasersteuereinrichtung (50) zur Steuerung des Schreibstrahls (49) aufweist, wobei die Zähleinrichtung mit der Lasersteuereinrichtung (50) zur Steuerung des Schreibstrahls (49) derart gekoppelt ist, dass eine Individualisierung der Codierung (26) zumindest in Abhängigkeit vom Wert (n) des Zählers (40) gewährleistet ist, wobei die Codierung an der Mantelfläche eines umlaufenden befestigungsrands der Linse vorgesehen ist.

8. Verfahren zur Herstellung von Linsen (20), bei dem eine Vielzahl von Linsen (20) vorzugsweise in einem taktweise arbeitenden Herstellverfahren geformt wird, **gekennzeichnet durch** die folgenden Schritte:
- Erzeugen eines für jede Linse (20) charakteristischen Werts (n), indem die Linsen (20) bei Zuführung zu der Codiereinrichtung (48) oder bei ihrer Herstellung gezählt werden und ein Zähler (40) bei jedem Zuführvorgang bzw. bei jedem Herstellvorgang um ein Inkrement erhöht wird, und
- Erzeugen einer individualisierenden Codierung (26) an der Linse (20), insbesondere an einer Oberfläche der Linse (20), wobei die Codierung (26) jeder Linse (20) in Abhängigkeit von dem jeweiligen Wert (n) des Zählers (40) individualisiert wird, wobei die Codierung an der Mantelfläche eines umlaufenden Befestigungsrands der Linse vorgesehen ist.

9. Verfahren nach Anspruch 8, bei dem die Linsen (20) durch einen Heißpressvorgang hergestellt werden.

10. Verfahren nach Anspruch 8 oder 9, bei dem die Codierung (26) auf einem optisch nicht wirksamen Bereich (24) der Linsen (20) erzeugt wird.

11. Verfahren nach Anspruch 10, bei dem die Codierung (26) an einem Randbereich der Linsen (20) erzeugt wird, der zur Halterung der Linsen (20) ausgebildet ist.

12. Verfahren nach Anspruch 11, bei dem die Codierung (26) an der Mantelfläche des Befestigungsrandes (24) erzeugt wird.

13. Verfahren nach einem der Ansprüche 8 bis 12, bei dem die Codierung (26) mittels eines Laserstrahls (49) erzeugt wird.

14. Verfahren nach Anspruch 13, bei dem mittels des Laserstrahls (49) Mikrorisse, Kristallisationsbereiche oder Mikroformänderungen auf der Linsenoberfläche erzeugt werden, die als Codierung (26) auslesbar sind.

15. Verfahren nach Anspruch 14, bei dem die Codierung (26) Mikroformänderungen in Form von Ausbrüchen enthält, die durch mittels eines Laserstrahls (49) induzierte Spannungen erzeugt werden.

16. Verfahren nach Anspruch 15, bei dem die Ausbrüche durch Umfahren einer annähernd geschlossenen Bahnkurve, etwa in Form eines Teilkreises, oder durch mehrere Punktbestrahlungen erzeugt werden, wobei die Intensität des Laserstrahls verändert werden kann.

17. Verfahren nach einem der Ansprüche 8 bis 16, bei dem die Codierung (26) alphanumerische Zeichen aufweist.

18. Verfahren nach einem der Ansprüche 8 bis 17, bei dem die Codierung (26) eine maschinenlesbare Codierung ist, insbesondere einen Data-Matrix-Code (DMC) nach dem Standard ECC 200 aufweist.

## Claims

1. A lens for illumination purposes, in particular a lens (20) for a headlamp (10) for projecting the light emitted by a light source (14) and possibly reflected by a reflector (12) in order to produce a predefined illumination pattern, comprising an individualized code (26), wherein the code (26) is produced by means of individualized product data from a production process, wherein the individualized product data comprise at least one characteristic value which is produced from a production process by a continuously running counter or by an incremental counter, **characterized in that** the code (26) is provided on a circumferential fixing edge (24) of the lens (20) which is designed to hold the lens (20).

2. The lens according to claim 1, wherein the code (26) is applied to an optically inactive region (24) of the lens (20).

3. The lens according to any of the preceding claims, wherein the code (26) is produced by means of a laser (46) or a printer, in particular an inkjet printer.

4. The lens according to any of the preceding claims, wherein the code (26) is produced by means of a CO₂ laser (46).

5. The lens according to any of the preceding claims, wherein the code (26) comprises alphanumeric characters.

6. The lens according to any of the preceding claims, wherein the code (26) is a machine-readable code, in particular a data matrix code (DMC) according to the ECC 200 Standard.

7. An apparatus for producing lenses (20) for illumination purposes, comprising a shaping device (32) for shaping lenses (20), in particular a pressing device for hot-pressing lenses, **characterized by** a coding device (48) for identifying the lenses (20) with a code (26), and by a counting device which has a counter whose value can be increased by an increment with each lens supplied to the coding device (48), the coding device (48) having a laser (46) for producing a write beam (49) and a laser control device (50) for controlling the write beam (49), the counting device (40) being coupled to the laser control device (50) for controlling the write beam (49) in such a way that individualization of the code (26) at least as a function of the value (n) of the counter (40) is ensured, wherein the code is provided on a circumferential fixing edge of the lens.

8. A method for producing lenses (20), wherein a plurality of lenses (20) is shaped in a production method that preferably operates intermittently, **characterized by** the following steps:
- producing a characteristic value (n) for each lens (20), wherein the lenses (20) are counted during their production and a counter is increased by an increment during each feeding operation or production operation, respectively,
- producing an individual code (26) on the lens (20), in particular on a surface of the lens (20), which is individualized as a function of the characteristic value (n) for each lens,
wherein the code is provided on a circumferential fixing edge of the lens.

9. The method according to Claim 8, wherein the lenses (20) are produced by a hot-pressing operation.

10. The method according to one of Claims 8 or 9, wherein the code (26) is produced on an optically inactive region (24) of the lenses (20).

11. The method according to Claim 10, wherein the code (26) is produced on an edge region of the lenses (20), which is designed to hold the lenses (20).

12. The method according to Claim 11, wherein the code (26) is produced on the circumferential surface of the fixing edge (24).

13. The method according to one of Claims 8 to 12, wherein the code (26) is produced by means of a laser beam (49).

14. The method according to Claim 13, wherein, by means of the laser beam (49), micro cracks, crystallization regions or micro shape changes are produced on the lens surface and can be read as a code (26).

15. The method according to Claim 14, wherein the code (26) contains micro shape changes in the form of break-outs, which are produced by stresses induced by means of a laser beam (49).

16. The method according to Claim 15, wherein the break-outs are produced by moving around an approximately self-contained curved path, for example in the form of a part circle, or by means of a plurality of point irradiations, it being possible for the intensity of the laser beam to be changed.

17. The method according to one of Claims 8 to 16, wherein the code (26) comprises alphanumeric characters.

18. The method according to one of Claims 8 to 17, wherein the code (26) is a machine-readable code, in particular a data matrix code (DMC) according to the ECC 200 Standard.

## Revendications

1. Lentille destinée à des applications d'éclairage, notamment lentille (20) pour un projecteur (10) destiné à représenter la lumière émise par une source de lumière (14) et éventuellement réfléchie par un réflecteur (12) en vue de générer un modèle d'éclairage prédéfini, comprenant un codage (26) personnalisé qui est généré au moyen de données de produit personnalisées à partir d'un processus de fabrication, les données de produit personnalisées présentant au moins une valeur caractéristique qui est générée par un compteur continu à partir d'un processus de fabrication, **caractérisée en ce que** le codage (26) est prévu sur la surface d'enveloppe (26') d'un bord de fixation (24) périphérique de la lentille (20), laquelle est configurée pour le maintien de la lentille (20).

2. Lentille selon la revendication 1, avec laquelle le codage (26) est appliqué sur une zone (24) non optiquement active de la lentille (20).

3. Lentille selon l'une des revendications précédentes, avec laquelle le codage (26) est généré au moyen d'un laser (46) ou d'une imprimante, notamment d'une imprimante à jet d'encre.

4. Lentille selon l'une des revendications précédentes, avec laquelle le codage (26) est généré au moyen d'un laser au CO₂ (46).

5. Lentille selon l'une des revendications précédentes, avec laquelle le codage (26) présente des caractères alphanumériques.

6. Lentille selon l'une des revendications précédentes, avec laquelle le codage (26) est un codage lisible par machine, notamment qui présente un code Data Matrix (DMC) selon la norme ECC200.

7. Dispositif de fabrication de lentilles (20) destinées à des applications d'éclairage, comprenant un dispositif de façonnage (32) pour façonner des lentilles (20), notamment un dispositif de pressage pour presser à chaud des lentilles, **caractérisé par** un dispositif de codage (48) destiné à identifier les lentilles (20) avec un codage (26), et par un dispositif de comptage qui présente un compteur (40) dont la valeur peut être augmentée d'un incrément à chaque lentille acheminée au dispositif de codage (48), le dispositif de codage (48) présentant un laser (46) destiné à générer un rayon d'écriture (49) et un dispositif de commande de laser (50) destiné à commander le rayon d'écriture (49), le dispositif de comptage étant couplé avec le dispositif de commande de laser (50) destiné à commander le rayon d'écriture (49) de telle sorte qu'une personnalisation du codage (26) est garantie au moins en fonction de la valeur (n) du compteur (40), le codage étant prévu sur la surface d'enveloppe d'un bord de fixation périphérique de la lentille.

8. Procédé de fabrication de lentilles (20), avec lequel sont façonnées une pluralité de lentilles (20) de préférence dans un procédé de fabrication exécuté de manière cyclique, **caractérisé par** les étapes suivantes :
- génération d'une valeur caractéristique (n) pour chaque lentille (20) en comptant les lentilles (20) lors de l'acheminement vers le dispositif de codage (48) ou lors de leur fabrication et en augmentant un compteur (40) d'un incrément à chaque opération d'acheminement ou à chaque opération de fabrication, et
- génération d'un codage (26) personnalisé sur la lentille (20), notamment sur une surface de la lentille (20), le codage (26) de chaque lentille (20) étant personnalisé en fonction de la valeur (n) correspondante du compteur (40), le codage étant prévu sur la surface d'enveloppe d'un bord de fixation périphérique de la lentille.

9. Procédé selon la revendication 8, avec lequel les lentilles (20) sont fabriquées par une opération de pressage à chaud.

10. Procédé selon la revendication 8 ou 9, avec lequel le codage (26) est généré sur une zone (24) non optiquement active de la lentille (20).

11. Procédé selon la revendication 10, avec lequel le codage (26) est généré sur une zone de bordure de la lentille (20), laquelle est configurée pour le maintien de la lentille (20).

12. Procédé selon la revendication 11, avec lequel le codage (26) est généré sur la surface d'enveloppe du bord de fixation (24).

13. Procédé selon l'une des revendications 8 à 12, avec lequel le codage (26) est généré au moyen d'un rayon laser (49).

14. Procédé selon la revendication 13, avec lequel des microfissures, des zones de cristallisation ou des microdéformations sont générées au moyen d'un rayon laser (49) sur la surface de la lentille, lesquelles peuvent être lues en tant que codage (26).

15. Procédé selon la revendication 14, avec lequel le codage (26) contient des microdéformations sous la forme de creusements qui sont générés par des tensions induites au moyen d'un rayon laser (49).

16. Procédé selon la revendication 15, avec lequel les creusements sont générés en contournant une portion de trajectoire approximativement fermée, par exemple sous la forme d'un cercle primitif, ou par plusieurs applications ponctuelles du rayon, l'intensité du rayon laser pouvant être modifiée.

17. Procédé selon l'une des revendications 8 à 16, avec lequel le codage (26) présente des caractères alphanumériques.

18. Procédé selon l'une des revendications 8 à 17, avec lequel le codage (26) est un codage lisible par machine, notamment qui présente un code Data Matrix (DMC) selon la norme ECC200.
